# EUROPEAN PATENT APPLICATION

(11) **EP 4 589 518 A1**
(43) Date of publication of application: **23.07.2025**
(21) Application number: 25151674.6
(22) Date of filing: 14.01.2025
(51) Int. Cl.: G06Q 30/0601, G06Q 50/12

(54) **ORDER SYSTEM, ORDER METHOD, AND COMPUTER PROGRAM PRODUCT FOR ORDERING ITEMS**

(30) Priority: 17.01.2024 JP 2024005579
(71) Applicant: GLORY LTD., Himeji-shi Hyogo 670-8567 (JP)
(72) Inventor: KUBOTA, Ryusei, Hyogo, 670-8567 (JP); IIDA, Katsuya, Tokyo, 151-0051 (JP)
(74) Representative: SSM Sandmair

(57) **Abstract**

An item order system 10 includes an order management server 20 and an order terminal 30. The order management server 20 recognizes a store status in advance, and acquires order data from the order terminal 30. The order management server 20 calculates a predicted provision time period for the ordered item, based on the order data, and determines a wait place, based on the store status and the predicted provision time period. The order management server 20 transmits accepted-order data including the wait place, to the order terminal. Upon receiving the accepted-order data, the order terminal 30 displays the accepted-order data including the wait place, and prints the accepted-order data on a paper slip.

## Description

### TECHNICAL FIELD

The present disclosure relates to an order system, an order method, and a computer program product for ordering items, to lead a customer who orders an item.

### BACKGROUND ART

Conventionally, a technology for performing reception and guidance of customers visiting stores has been known. For example, a computer-synthesized guidance voice data for reception of a customer and for guiding the customer to a target seat is streamed to a plurality of speaker devices provided at predetermined places in the store. The speaker devices play the guidance voice data, and a plurality of illumination devices provided at predetermined places in the store are lit in accordance with a guiding route for each customer.

### SUMMARY

However, in conventional technologies, there is a case where a large number of customers are guided to one place in the store, and as a result, the place becomes crowded with the customers. The place to which a customer is led needs to be selected as appropriate in consideration of purchased items and the congestion status of the store.

For example, a restaurant, in which customers pick up items at a pick-up counter, includes the pick-up counter, a wait space, customer seats, and the like. Unless customers are led to appropriate places, a specific one place among these places may become congested. When the store offers not only dine-in in the store but also takeout or mobile ordering services of food and beverages, it becomes complicated to determine which customers should be guided to which places.

The present disclosure has been made in view of the problem, as well as other problems, of the conventional art, and the present disclosure addresses these issues, as discussed herein, with an item order system, an item order method, and a computer program product for ordering an item to smoothly lead customers who order the item.

An item order system according to one aspect of the present disclosure is configured to perform order acceptance and settlement with respect to an item ordered by a customer. The item order system includes: an order information collection unit configured to collect order information regarding an item ordered by a customer; a status information collection unit configured to collect store status information regarding a status of a store; a prediction unit configured to predict a provision time period taken until provision of the ordered item to the customer, based on at least one of the order information collected by the order information collection unit and the store status information collected by the status information collection unit; a determination unit configured to determine a wait place where the customer waits until picking up the ordered item, based on the provision time period predicted by the prediction unit; and a notification unit configured to notify the wait place determined by the wait place determination unit.

The objects, features, advantages, and technical and industrial significance of this disclosure will be better understood by the following description and the accompanying drawings of the disclosure.

### BRIEF DESCRIPTION OF THE DRAWINGS

FIG. 1 shows an outline of an item order system according to an embodiment;
FIG. 2 shows a configuration example of the item order system;
FIG. 3 is a function block diagram showing a configuration of an order management server shown in FIG. 2;
FIG. 4 shows an example of cooking time period data;
FIG. 5 shows an example of store status data;
FIG. 6 shows an example of order data;
FIG. 7 shows an example of accepted-order data;
FIG. 8 is a function block diagram showing a configuration of an order terminal shown in FIG. 2;
FIG. 9 is a function block diagram showing a configuration of a mobile terminal shown in FIG. 2;
FIG. 10 is a sequence diagram showing a processing procedure performed by the item order system when an item is ordered from the order terminal;
FIGS. 11A to 11D each show an example of screen display performed by the order terminal;
FIG. 12 is a function block diagram showing a configuration of an order management server according to Modification 1;
FIG. 13 is a function block diagram showing a configuration of an order management server according to Modification 2; and
FIG. 14 shows an example of a hardware configuration.

### DESCRIPTION OF EMBODIMENTS

Hereinafter, an embodiment of an item order system, an item order method, and a computer program product for ordering an item according to the present disclosure will be described in detail with reference to the drawings.

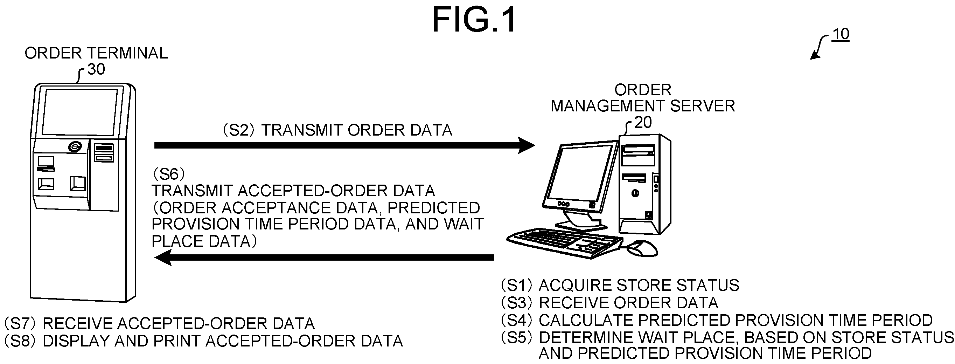

First, an outline of an item order system 10 according to the present embodiment will be described. FIG. 1 shows an outline of the item order system 10 according to the embodiment. The item order system 10 receives order data and a store status. The item order system 10 calculates a predicted provision time period for the item corresponding to the order data, and presents a wait place for the customer, based on the store status and the predicted provision time period. The item order system 10 reduces the number of store clerks for leading customers and alleviate congestion of the customers waiting ordered items.

As shown in FIG. 1, the item order system 10 includes an order management server 20 (order management device) and an order terminal 30. The order management server 20 acquires a store status (S1). In one example, the store status is the congestion status of a place for picking up ordered items by customers and a place for customers waiting ordered items, such as a pick-up counter for takeout items, a waiting space, a customer room, etc. The order terminal 30 accepts an order from a customer, and transmits order data to the order management server 20 (S2).

The order management server 20 receives the order data (S3), and calculates a predicted provision time period for the item of the order (S4). Then, the order management server 20 determines a wait place, based on the store status and the predicted provision time period (S5). For example, if the order data is in a takeout provision form, the predicted provision time period is longer than a predetermined threshold, and there is vacancy in customer seats, the order management server 20 determines the customer seats as the wait place.

Then, the order management server 20 transmits accepted-order data, which includes the order data, the predicted provision time period, and the wait place, to the order terminal 30 (S6). Upon having received the accepted-order data (S7), the order terminal 30 displays information corresponding to the accepted-order data and prints out a paper with the information (S8).

The item order system 10 provides a customer with information on a wait place for the customer who picks up a purchased item, based on the store status and the predicted provision time period for the item corresponding to the order data. It enables smooth guide and lead of the customer when the item order system 10 has accepted an order of an item from the customer.

### <Configuration of item order system 10>

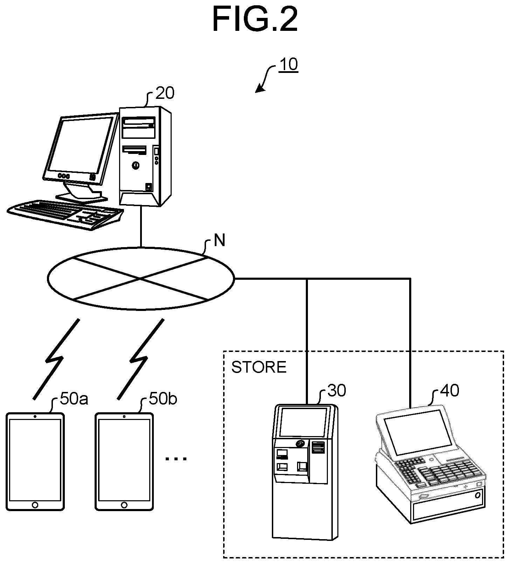

A configuration example of the item order system 10 will be described. FIG. 2 shows an example of a configuration of the item order system 10. In the example shown in FIG. 2, the item order system 10 includes the order management server 20, the order terminal 30, a POS terminal 40, and a plurality of mobile terminals 50a, 50b. Hereinafter, the mobile terminals 50a, 50b may be collectively referred to as "mobile terminal 50". The order management server 20, the order terminal 30, the POS terminal 40, and the mobile terminals 50a, 50b are connected via a network N.

The order management server 20 performs: a process of collecting a store status; a process of collecting order data; a process of predicting a provision time period for an item based on the order data; a process of determining a wait place based on the store status and the predicted provision time period; a process of calculating a pick-up time based on the predicted provision time period; a process of transmitting accepted-order data; and the like.

The order terminal 30 is installed in a store. The order terminal 30 performs: a process of displaying a menu on a predetermined operation/display unit 31 of the order terminal 30; a process of accepting an order of an item selected by a customer; a process of performing settlement of the payment for the ordered item; a process of transmitting order data to the order management server 20; a process of receiving accepted-order data from the order management server 20; a process of displaying the received accepted-order data on the predetermined operation/display unit 31; a process of printing the accepted-order data on a paper, and the like. The POS terminal 40 can perform the same processes as those of the order terminal 30. For example, the order terminal 30 performs the processes through operations performed by the customer, while the POS terminal 40 performs the same processes through operations performed by a store clerk for a customer.

The mobile terminal 50 performs: a process of displaying a menu on a predetermined operation/display unit of the mobile terminal 50; a process of accepting an order of an item selected by a customer; a process of performing settlement of the payment for the ordered item; a process of transmitting order data to the order management server 20; a process of receiving accepted-order data from the order management server 20; a process of displaying the received accepted-order data on the predetermined operation/display unit, and the like.

### <Configuration of order management server 20>

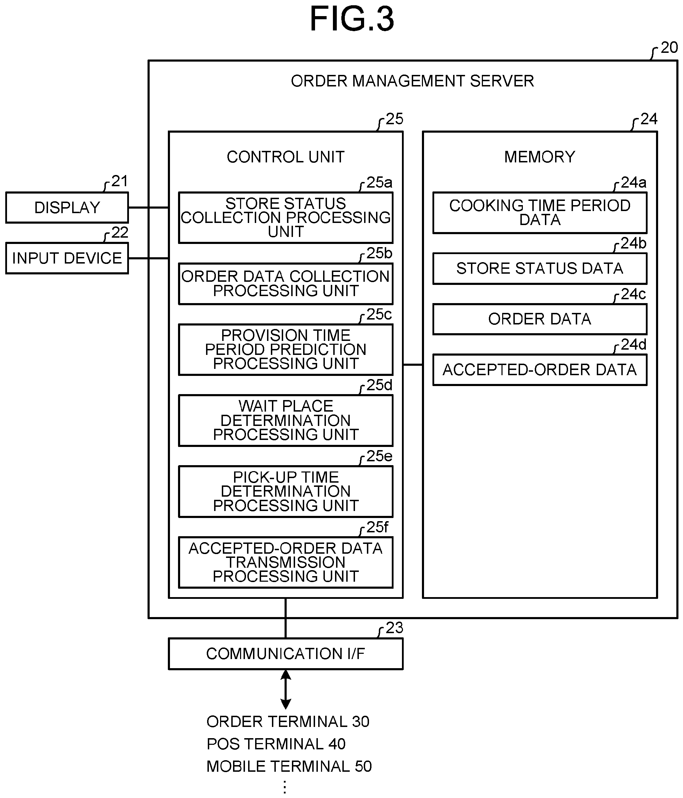

A configuration example of the order management server 20 shown in FIG. 2 will be described. FIG. 3 is a function block diagram showing an example of a configuration of the order management server 20. In the example shown in FIG. 3, the order management server 20 includes a memory 24 and a control unit 25, and is connected with a display 21, an input device 22, and a communication I/F 23. The display 21 is a display device such as a liquid crystal display that displays various types of information. The input device 22 is a device such as a mouse and a keyboard. The communication I/F 23 is a unit for communicating with the order terminal 30, the POS terminal 40, and the mobile terminal 50 via the network N.

The memory 24 is a storage device composed of a hard disk device, a nonvolatile memory, or the like. The memory 24 stores cooking time period data 24a, store status data 24b, order data 24c, and accepted-order data 24d.

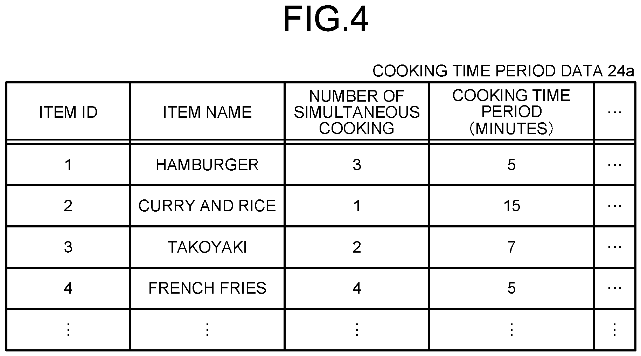

The cooking time period data 24a indicates cooking time periods for respective items on a menu provided by the store. FIG. 4 shows an example of the cooking time data 24a. In the example shown in FIG. 4, the cooking time period data 24a includes an item ID, an item name, the number of simultaneous cooking, a cooking time period, and the like. In the cooking data 24a shown in FIG. 4, item ID "1" is associated with item name "hamburger", the number of simultaneous cooking "3", and cooking time period "5" minutes. The item ID "2" is associated with item name "curry and rice", the number of simultaneous cooking "1", and cooking time period "15" minutes. The item ID "3" is associated with item name "takoyaki", the number of simultaneous cooking "2", and cooking time period "7" minutes. The item ID "4" is associated with item name "French fries", the number of simultaneous cooking "4", and cooking time period "5" minutes.

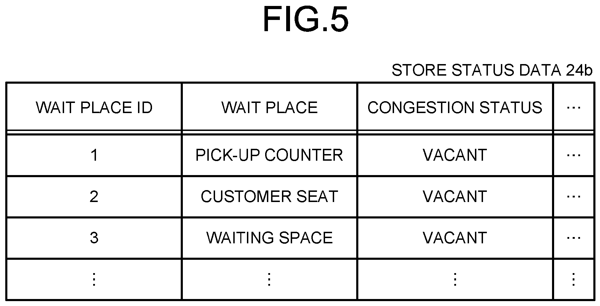

The store status data 24b indicates the congestion statuses of wait places present in the store. FIG. 5 shows an example of the store status data 24b. In the example shown in FIG. 5, the store status data 24b includes a wait place ID, a wait place, a congestion status, and the like. In the store status data 24b shown in FIG. 5, wait place ID "1" is associated with wait place "pick-up counter" and congestion status "vacant". Wait place ID "2" is associated with wait place "customer seat" and congestion status "vacant". Wait place ID "3" is associated with wait place "waiting space" and congestion status "vacant".

With respect to the wait place in the store status data 24b, when there are both of an indoor waiting space and an outdoor waiting space, the wait place may be divided into "in-store wait space" and "outside-store wait space". The congestion status may be the number of people in each wait place, the ratio of the number of waiting people to an allowable number of people in that place, or the like. The congestion status may indicate a congestion degree of the store.

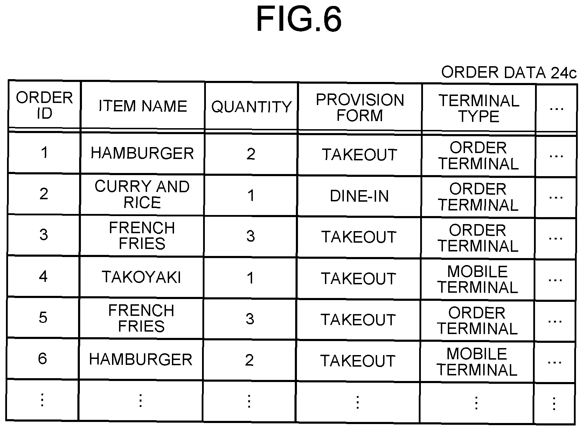

The order data 24c indicates an order of an item selected by a customer. The order data 24c is transmitted from the order terminal 30, the POS terminal 40, the mobile terminal 50, or the like. FIG. 6 shows an example of the order data 24c. In the example shown in FIG. 6, the order data 24c includes an order ID, an item name (order item), a quantity (order quantity), a provision form (item provision form), a terminal type, and the like. In the order data 24c shown in FIG. 6, order ID "1" is associated with item name "hamburger", quantity "2", provision form "takeout", and terminal type "order terminal". Order ID "2" is associated with item name "curry and rice", quantity "1", provision form "dine-in", and terminal type "order terminal".

Order ID "3" is associated with item name "French fries", quantity "3", provision form "takeout", and terminal type "order terminal". Order ID "4" is associated with item name "takoyaki", quantity "1", provision form "takeout", and terminal type "mobile terminal". Order ID "5" is associated with item name "French fries", quantity "3", provision form "takeout", and terminal type "order terminal". Order ID "6" is associated with item name "hamburger", quantity "2", provision form "takeout", and terminal type "mobile terminal". The order data 24c may include a monetary amount for ordered items, and the like.

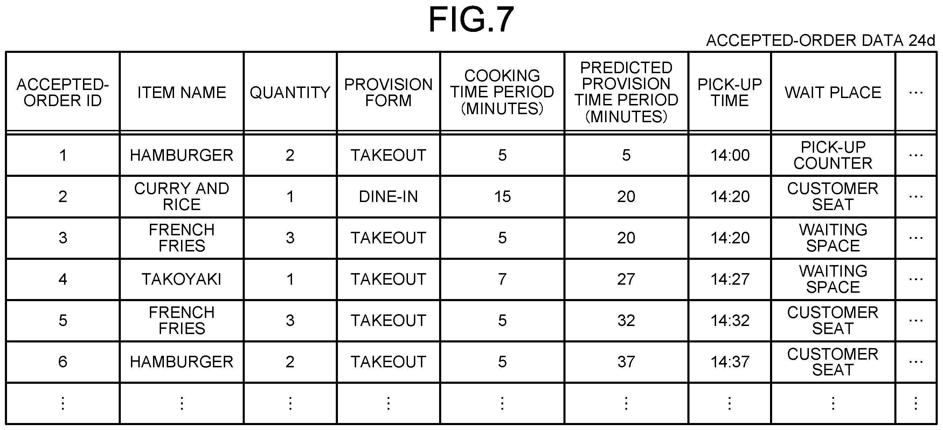

The accepted-order data 24d includes a cooking time period, a predicted provision time period, a pick-up time, a wait place, and the like that are associated with each other. FIG. 7 shows an example of the accepted-order data 24d. In the example shown in FIG. 7, the accepted-order data 24d includes an accepted-order ID, an item name, a quantity, a provision form, a cooking time period (minutes), a predicted provision time period (minutes), a pick-up time, a wait place, and the like. In the accepted-order data 24d shown in FIG. 7, accepted-order ID "1" is associated with item name "hamburger", quantity "2", provision form "takeout", cooking time period (minutes) "5", predicted provision time period (minutes) "5", pick-up time "14:00", and wait place "pick-up counter". Accepted-order ID "2" is associated with item name "curry and rice", quantity "1", provision form "dine-in", cooking time period (minutes) "15", predicted provision time period (minutes) "20", pick-up time "14:20", and wait place "customer seat".

Further, accepted-order ID "3" is associated with item name "French fries", quantity "3", provision form "takeout", cooking time period (minutes) "5", predicted provision time period (minutes) "20", pick-up time "14:20", and wait place "waiting space". Accepted-order ID "4" is associated with item name "takoyaki", quantity "1", provision form "takeout", cooking time period (minutes) "7", predicted provision time period (minutes) "27", pick-up time "14:27", and wait place "waiting space". Accepted-order ID "5" is associated with item name "French fries", quantity "3", provision form "takeout", cooking time period (minutes) "5", predicted provision time period (minutes) "32", pick-up time "14:32", and wait place "customer seat". Accepted-order ID "6" is associated with item name "hamburger", quantity "2", provision form "takeout", cooking time period (minutes) "5", predicted provision time period (minutes) "37", pick-up time "14:37", and wait place "customer seat".

The control unit 25 performs control of the entirety of the order management server 20. As shown in FIG. 3, the control unit 25 includes: a store status collection processing unit 25a (status information collection unit); an order data collection processing unit 25b (order information collection unit); a provision time period prediction processing unit 25c (prediction unit); a wait place determination processing unit 25d (determination unit); a pick-up time determination processing unit 25e; and an accepted-order data transmission processing unit 25f. Specifically, for example, programs for these units are loaded to a CPU and executed, whereby processes respectively corresponding to the store status collection processing unit 25a, the order data collection processing unit 25b, the provision time period prediction processing unit 25c, the wait place determination processing unit 25d, the pick-up time determination processing unit 25e, and the accepted-order data transmission processing unit 25f are performed.

The store status collection processing unit 25a collects data from a camera, a sensor, and the like installed in the store. The store status collection processing unit 25a also collects the congestion status of the in-store wait place that are a reception counter, customer seats, the waiting space, etc. The store status collection processing unit 25a stores the collected data, as the store status data 24b, in the memory 24.

The order data collection processing unit 25b receives order data transmitted from the order terminal 30, the POS terminal 40, the mobile terminal 50, or the like. The order data collection processing unit 25b stores the received data, as the order data 24c, in the memory 24.

The provision time period prediction processing unit 25c predicts a time period necessary for the ordered item to be provided to a customer. The time period is calculated from a cooking time period and a waiting time period corresponding to the item name in the order data 24c. For example, when the ordered item is a hamburger, if the cooking time period is 5 minutes, and the waiting time period is 20 minutes, the predicted provision time period is calculated to be 25 minutes. The waiting time period may be a total of the cooking time periods for items, which have not been provided to other waiting customers, at the time point of reception of the order.

The wait place determination processing unit 25d determines a place where the customer waits for the ordered item during the predicted provision time period. The wait place determination processing unit 25d determines the place based on the store status data 24b, the provision form such as dine-in, takeout, etc., included in the order data 24c, the terminal type, and the predicted provision time period calculated by the provision time period prediction processing unit 25c.

For example, when the terminal type is the order terminal 30 and the provision form is dine-in, if the predicted provision time period is shorter than a predetermined threshold, the pick-up counter is determined to be the wait place. On the other hand, when the predicted provision time period is longer than the predetermined threshold, if the customer seats are not full, the customer seats are determined to be the wait place, while if the customer seats are full, the wait space is determined to be the wait place.

For example, when the terminal type is the order terminal 30 and the provision form is takeout, if the predicted provision time period is shorter than a predetermined threshold, the pick-up counter is determined to be the wait place. On the other hand, when the predicted provision time period is longer than the predetermined threshold, if the wait space is not full, the wait space is determined to be the wait place, while if the wait space is full, the customer seats are determined to be the wait place.

For example, when the terminal type is the mobile terminal 50, the pick-up space is determined to be the wait place on the assumption that the customer comes at the pick-up time. When the customer having made the order through the mobile terminal 50 has arrived at the store earlier than the pick-up time, the order terminal 30 may read a two-dimensional bar code on the order displayed on the mobile terminal 50, whereby the wait place at the store may be designated based on the difference between the arrival time and the pick-up time, etc.

The pick-up time determination processing unit 25e calculates an item pick-up time, based on the predicted provision time period predicted by the provision time period prediction processing unit 25c and the time of acceptance of the order. For example, if an order of curry and rice has been accepted at a time of 14:00 and the predicted provision time period therefor is 20 minutes, the pick-up time is calculated to be 14:20. For another example, if an order in the takeout provision form has been accepted from the mobile terminal 50, and a desired pick-up time is included in the order data, the desired pick-up time included in the order data and the pick-up time calculated by the pick-up time determination processing unit 25e are compared with each other. When the desired pick-up time is later than the pick-up time, the desired pick-up time is set to be the pick-up time.

The accepted-order data transmission processing unit 25f transmits the accepted-order data 24d generated based on the accepted order, to the order terminal 30, the POS terminal 40, or the mobile terminal 50 that has transmitted the order data to the order management server 20.

### <Configuration of order terminal 30>

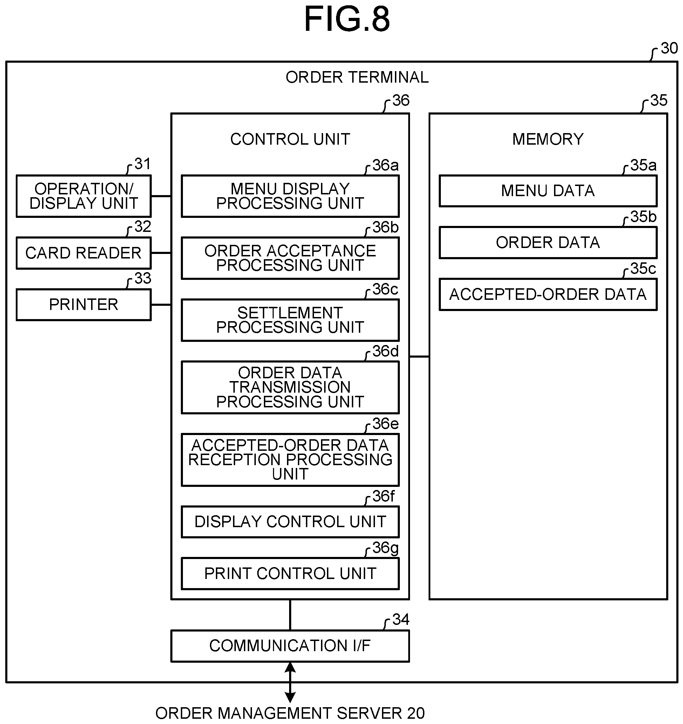

A configuration example of the order terminal 30 shown in FIG. 2 will be described. FIG. 8 is a function block diagram showing an example of a configuration of the order terminal. In the example shown in FIG. 8, the order terminal 30 includes the operation/display unit 31, a card reader 32, a printer 33, a communication I/F 34, a memory 35, and a control unit 36. The operation/display unit 31 is a display device also functioning as an input device. The operation/display unit 31 performs display by using a device such as a liquid crystal panel, an organic EL (Electro Luminescence), or another type of display, and that accepts an inputting operation in a pressure-sensitive manner or the like. The operation/display unit 31 displays a screen including a menu of items that can be selected by customers.

The card reader 32 is a reading device that reads data from an IC card having a noncontact IC chip according to the NFC (Near Field Communication) standard. The card reader 32 may also read data from a smartphone using the NFC standard, data of a two-dimensional bar code displayed on a smartphone, or the like. The printer 33 prints accepted-order data including a wait place, on a heat-sensitive paper sheet or the like. The communication I/F 34 is a unit for communicating with the order management server 20 via the network N.

The memory 35 is a storage device composed of a hard disk device, a nonvolatile memory, or the like. The memory 35 stores menu data 35a, order data 35b, and accepted-order data 35c. The menu data 35a is data composed of various types of menu provided in the store. The menu data 35a may include various types of menu, such as a menu provided only in a certain time period such as a lunch time and a menu provided only in a certain season. Such menu data 35a may be set in advance by a store manager or the like.

The order data 35b is data on an order of an item selected by a customer. The order data 35b includes an order ID, an item name, an order quantity, a provision form, a terminal type, and the like. The accepted-order data 35c is data on an item and the like of an accepted order. The accepted-order data 35c is transmitted from the order management server 20. The accepted-order data 35c includes an accepted-order ID, an item name, a quantity, a provision form, a cooking time period, a predicted provision time period, a pick-up time, a wait place, and the like.

The control unit 36 performs control of the entirety of the order terminal 30. The control unit 36 includes a menu display processing unit 36a, an order acceptance processing unit 36b, a settlement processing unit 36c, an order data transmission processing unit 36d, an accepted-order data reception processing unit 36e, a display control unit 36f (notification unit), and a print control unit 36g (output unit). Specifically, for example, programs for these units are loaded to a CPU and executed, whereby processes respectively corresponding to the menu display processing unit 36a, the order acceptance processing unit 36b, the settlement processing unit 36c, the order data transmission processing unit 36d, the accepted-order data reception processing unit 36e, the display control unit 36f, and the print control unit 36g are performed.

The menu display processing unit 36a reads out the menu data 35a set in advance by a store manager or the like, and displays the menu data 35a on the operation/display unit 31. The menu display processing unit 36a may change a menu according to the time of day. For example, the menu display processing unit 36a changes the standard menu to a lunch menu in a lunchtime period from 11 o'clock in the morning to 1 o'clock in the afternoon.

The order acceptance processing unit 36b accepts an order from a customer when the customer has selected an item, an order quantity, a provision form, and the like, from the menu displayed on the operation/display unit 31 and finalized an order of the selected item.

The settlement processing unit 36c settles a payment for a customer when the order acceptance processing unit 36b has accepted an order from the customer. Specifically, upon acceptance of an order from the customer, the settlement processing unit 36c displays, on the operation/display unit 31, the price of the ordered item, and settlement methods using means such as credit card, IC card, two-dimensional bar code with a smartphone, etc. For example, after the customer has selected a settlement method that uses a card, the settlement processing unit 36c reads card data by the card reader 32 and performs settlement in accordance with the settlement method. The settlement may be performed by using a settlement server or the like.

The order data transmission processing unit 36d transmits the order data 35b to the order management server 20 when the settlement has been completed by the settlement processing unit 36c. The accepted-order data reception processing unit 36e receives the accepted-order data 35c transmitted from the order management server 20.

The display control unit 36f controls display on the predetermined display. The display control unit 36f displays the accepted-order data 35c on the operation/display unit 31. For example, the display control unit 36f displays data of the accepted-order ID, the pick-up time, the wait place, etc., included in the accepted-order data 35c. The print control unit 36g transmits the displayed data to the predetermined printer 33 to print the data on a paper.

The configuration of the POS terminal 40 is equivalent to that of the order terminal 30 except that the operations such as input of an order and selection of a settlement process may be performed by a store clerk.

### <Configuration of mobile terminal 50>

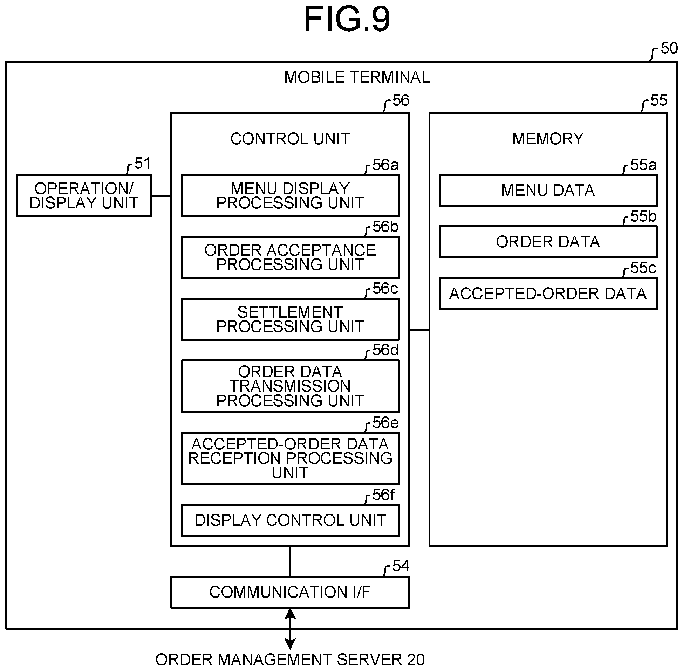

A configuration example of the mobile terminal 50 will be described. FIG. 9 is a function block diagram showing an example of a configuration of the mobile terminal shown in FIG. 2. In the example shown in FIG. 9, the mobile terminal 50 includes an operation/display unit 51, a communication I/F 54, a memory 55, and a control unit 56. The operation/display unit 51 is a display device also functioning as an input device. The operation/display unit 51 performs display by using a device such as a liquid crystal panel, an organic EL (Electro Luminescence), or another type of display, and that accepts an inputting operation in a pressure-sensitive manner or the like. The operation/display unit 51 displays a screen including a menu of items that can be selected by customers. The communication I/F 54 is a unit for communicating with the order management server 20 via the network N.

The memory 55 is a storage device composed of a hard disk device, a nonvolatile memory, or the like. The memory 55 stores menu data 55a, order data 55b, and accepted-order data 55c. The menu data 55a is data composed of various types of menu provided in the store. The menu data 55a may include various types of menu provided in the store, such as a menu provided only in a certain time period such as a lunch time and a menu provided only in a certain season. Such menu data 35a may be set in advance by a store manager or the like.

The order data 55b is data on an order of an item selected by a customer. The order data 55b includes an order ID, an item name, an order quantity, a provision form, a desired pick-up time, and the like. The accepted-order data 55c is data on an item and the like of an accepted order. The accepted-order data 55c is transmitted from the order management server 20. The accepted-order data 55c includes an accepted-order ID, an item name, a quantity, a provision form, a cooking time period, a predicted provision time period, a pick-up time, a wait place, and the like.

The control unit 56 performs control of the entirety of the mobile terminal 50. The control unit 36 includes a menu display processing unit 56a, an order acceptance processing unit 56b, a settlement processing unit 56c, an order data transmission processing unit 56d, an accepted-order data reception processing unit 56e, and a display control unit 56f. Specifically, for example, programs for these units are loaded to a CPU and executed, whereby processes respectively corresponding to the menu display processing unit 56a, the order acceptance processing unit 56b, the settlement processing unit 56c, the order data transmission processing unit 56d, the accepted-order data reception processing unit 56e, and the display control unit 56f are performed.

The menu display processing unit 56a reads out the menu data 55a set in advance by a store manager or the like and displays the menu data 55a on the operation/display unit 51. The order acceptance processing unit 56b accepts an order when the customer has selected an item, an order quantity, a provision form, a desired pick-up time, and the like, from the menu displayed on the operation/display unit 51 and finalized an order of the selected item.

The settlement processing unit 56c settles a payment when the order acceptance processing unit 56b has accepted an order from the customer. Specifically, upon acceptance of an order from the customer, the settlement processing unit 56c displays, on the operation/display unit 51, the price of the ordered item, and settlement methods using means such as credit card, IC card, two-dimensional bar code with a smartphone, etc. For example, after the customer has selected a settlement method that uses a card, the settlement processing unit 56c performs settlement in accordance with the settlement method. The settlement may be performed by using a settlement server or the like connected to the mobile terminal 50.

The order data transmission processing unit 56d transmits the order data 55b to the order management server 20 when the settlement has been completed by the settlement processing unit 56c. The accepted-order data reception processing unit 56e receives the accepted-order data 55c transmitted from the order management server 20.

The display control unit 56f controls display on the predetermined display. The display control unit 56f displays the accepted-order data 55c on the operation/display unit 51. For example, the display control unit 56f displays data of the accepted-order ID, the pick-up time, the wait place, etc., included in the accepted-order data 55c.

### <Processing procedure of item order system 10 using order terminal 30>

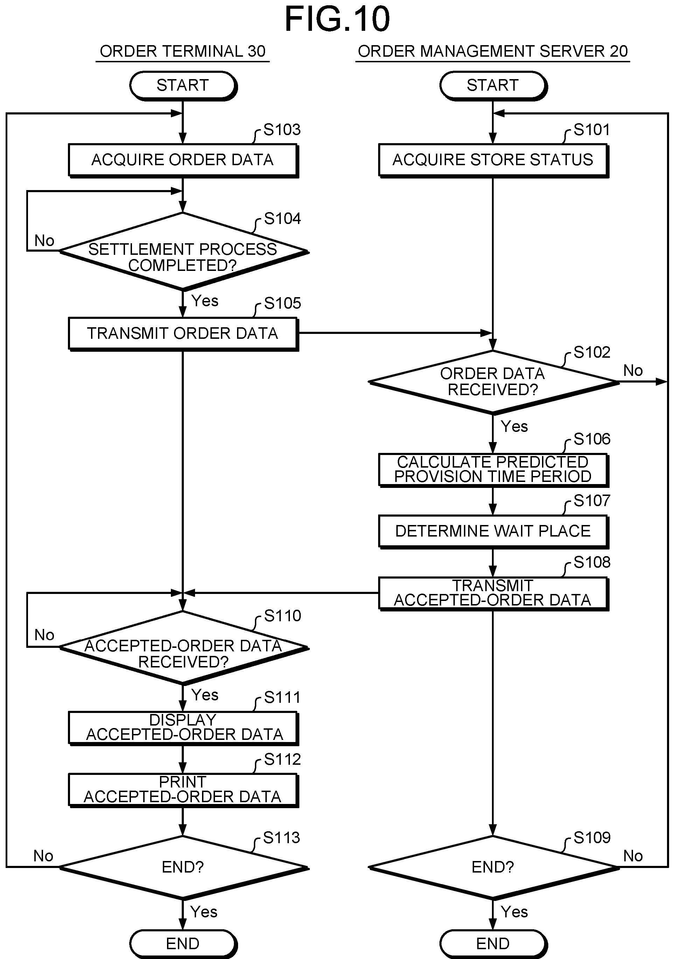

An example of a processing procedure of the item order system 10 using the order terminal 30 will be described. FIG. 10 is an example of a sequence diagram showing a processing procedure of the item order system 10 when an item is ordered from the order terminal 30. The menu of items necessary for making an order is displayed on the predetermined operation/display unit 31 of the order terminal 30 in advance. As shown in FIG. 10, the order management server 20 acquires a store status (S101). The order terminal 30 acquires order data including an item, a provision form, and the like, selected by the customer (S103).

Then, the order terminal 30 determines whether or not a settlement process has been completed (step S104). When the settlement process has not been completed (step S104: No), the order terminal 30 waits until the settlement is completed. When the settlement process has been completed (step S104: Yes), the order terminal 30 transmits the order data to the order management server 20 (step S105).

The order management server 20 determines whether or not order data has been received from the order terminal 30 (step S102). When not having received the order data (step S102: No), the order management server 20 returns to step S101. Meanwhile, upon having received the order data (step S102: Yes), the order management server 20 calculates a predicted provision time period (step S106). Then, the order management server 20 determines a wait place, based on the provision form and the predicted provision time period (step S107).

Then, the order management server 20 transmits accepted-order data to the order terminal 30 (step S108). Then, the order management server 20 determines whether or not to end its operation (step S109). For example, in a status where the business hours of the store have ended and a new order will not occur, the operator makes a predetermined operation to end the operation of the order management server 20. Upon having received such an operation, the order management server 20 determines to end its operation (step S109: Yes), and ends the series of operations. Meanwhile, when there is no operation to end the operation of the order management server 20 (step S109: No), the process is shifted to step S101.

The order terminal 30 determines whether or not accepted-order data has been received from the order management server 20 (step S110). When not having received the accepted-order data (step S110: No), the order terminal 30 waits until receiving the accepted-order data. Meanwhile, upon having received the accepted-order data (step S110: Yes), the order terminal 30 displays information on the accepted-order data, on the operation/display unit 31 of the order terminal 30 (step S111). Then, the order terminal 30 prints out a paper including information on the accepted-order data (step S112).

Then, the order terminal 30 determines whether or not to end its operation (step S113). For example, in a status where the business hours of the store have ended and a new order will not occur, if the operator has made an operation to end the operation of the order terminal 30, the order terminal 30 determines to end its operation (step S113: Yes), and ends the series of operations. Meanwhile, when there is no operation to end the operation of the order terminal 30 (step S113: No), the process is shifted to step S103.

The processing procedure of the item order system 10 using the POS terminal 40 is the same as those using the order terminal 30, and thus, detailed description thereof is omitted.

The processing procedure of the item order system 10 using the mobile terminal 50 is also the same except that data on a desired pick-up time is acquired in the acquisition of order data (step S103) in the processing procedure of the item order system 10 using the order terminal 30, and printing of the accepted-order data (step S112) is not performed. Therefore, detailed description thereof is omitted.

### <Screen display performed by order terminal 30>

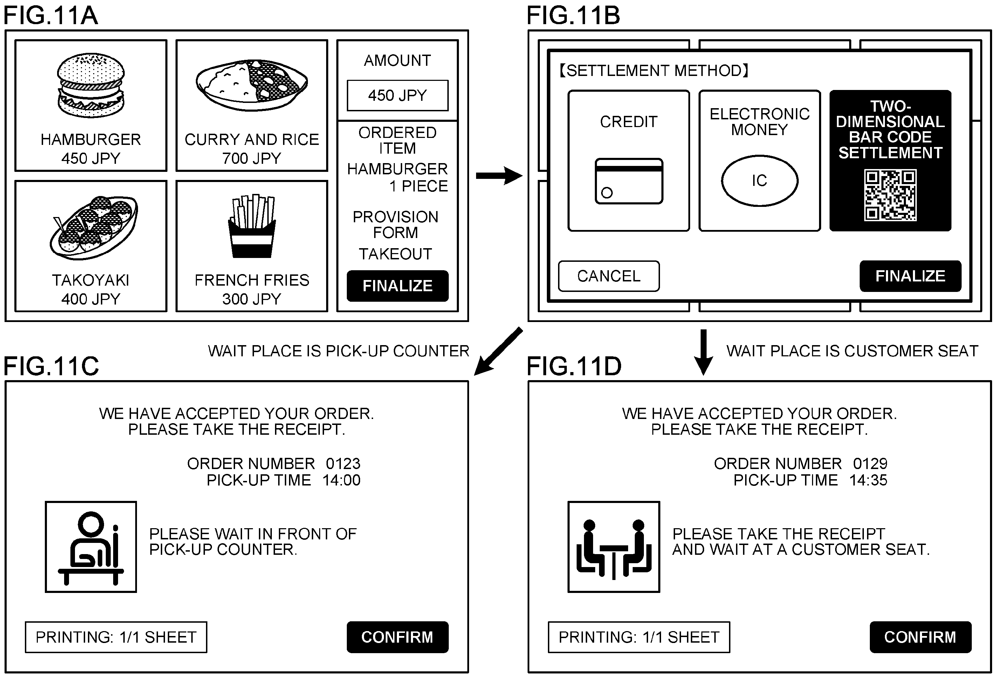

An example of screen display performed by the order terminal 30 will be described. FIGS. 11A to 11D each show an example of screen display performed by the order terminal 30. In the example shown in FIG. 11A, hamburger, curry and rice, takoyaki, and French fries are displayed, as a menu, on the operation/display unit 31 of the order terminal 30. The screen shows a state where the customer has selected one hamburger and "takeout" as the provision form, and the amount is 450 JPY. When the customer has touched the display of "finalize", a menu of settlement methods is displayed on the operation/display unit 31 as shown in FIG. 11B.

When the customer has selected two-dimensional bar code settlement, and the settlement has ended, order data is transmitted from the order terminal 30 to the order management server 20. In the order management server 20, a predicted provision time period is calculated and a pick-up time is determined based on the predicted provision time period. Then, accepted-order data is transmitted from the order management server 20 to the order terminal 30. The screen transitions to a screen shown in FIG. 11C or FIG. 11D based on the data of the wait place included in the accepted-order data. If the wait place is the pick-up counter, the order terminal 30 displays the screen shown in FIG. 11C, including the order number, the pick-up time, and information asking a customer to wait in front of the pick-up counter. The order terminal 30 prints the same data on a receipt. While printing the receipt, information indicating that is displayed on the screen as shown in FIG. 11C. If the wait place is the customer seats, the order terminal 30 displays the screen shown in FIG. 11D, including the order number, the pick-up time, and an information asking a customer to wait at a customer seat. The order terminal 30 prints the same data on a receipt while displaying information on that, as shown in FIG. 11D.

### <Modification 1>

In the above embodiment, a case where the predicted provision time period is calculated in the order management server 20 in accordance with an order, has been described. However, in Modification 1, a case where an order management server 60 calculates the predicted provision time period in accordance with an order and store-staff attendance data, will be described.

### <Configuration of order management server 60>

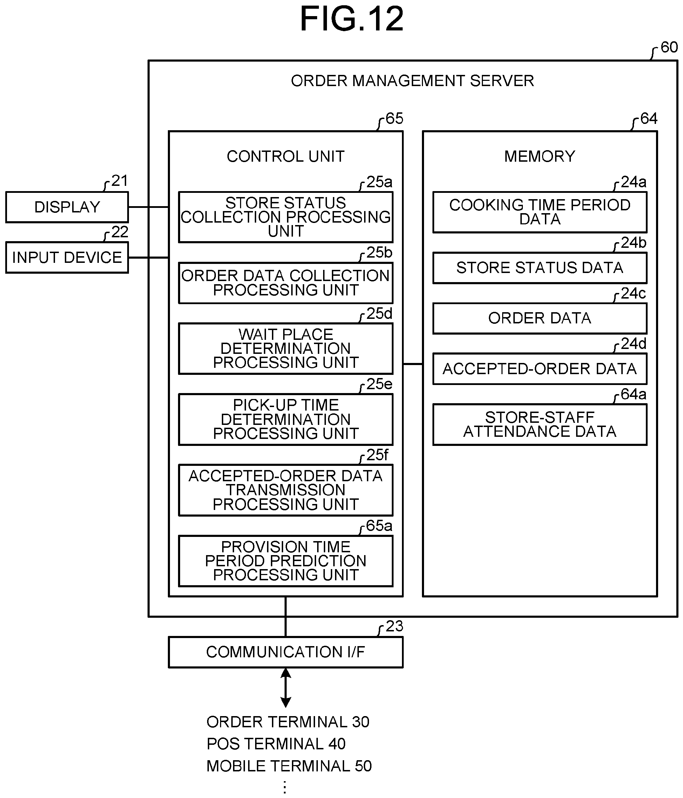

FIG. 12 is a function block diagram showing a configuration example of the order management server 60 according to Modification 1. The same parts as those of the above embodiment are denoted by the same reference characters and detailed description thereof is omitted.

As shown in FIG. 12, the order management server 60 includes a memory 64 and a control unit 65, and is connected with the display 21, the input device 22, and the communication I/F 23.

The memory 64 is a storage device composed of a hard disk device, a nonvolatile memory, or the like, and stores the cooking time period data 24a, the store status data 24b, the order data 24c, the accepted-order data 24d, and store-staff attendance data 64a. The store-staff attendance data 64a is data on the attendance status of the store clerks. The store-staff attendance data 64a may include the number of clerks working on preparing items ordered by customers in the store.

The control unit 65 performs control of the entirety of the order management server 60. The control unit 65 includes the store status collection processing unit 25a, the order data collection processing unit 25b, the wait place determination processing unit 25d, the pick-up time determination processing unit 25e, the accepted-order data transmission processing unit 25f, and a provision time period prediction processing unit 65a. Specifically, for example, programs for these units are loaded to a CPU and executed, whereby processes respectively corresponding to the store status collection processing unit 25a, the order data collection processing unit 25b, the wait place determination processing unit 25d, the pick-up time determination processing unit 25e, the accepted-order data transmission processing unit 25f, and the provision time period prediction processing unit 65a are performed.

The provision time period prediction processing unit 65a predicts a time period necessary for the ordered item until it can be provided to a customer. The time period is calculated based on a corresponding cooking time period and a waiting time period corresponding to the item name in the order data 24c, and the store-staff attendance data 64a. For example, when the ordered item is a hamburger, if the cooking time period is 5 minutes, the waiting time period is 20 minutes, and the additional waiting time period calculated based on the store-staff attendance data 64a is 5 minutes, the predicted provision time period is calculated to be 30 minutes. The waiting time period may be a total of the cooking time periods for items, which have not been provided to other waiting customers, at the time point of reception of the order.

In Modification 1, a case where the attendance data of the store clerks is stored as the store-staff attendance data 64a has been described. However, the data of the wait place and the attendance data of the store clerks may be stored in the store status data 24b.

### <Modification 2>

In the above embodiment, a case where the predicted provision time period is calculated in the order management server 20 in accordance with an order, has been described. However, in Modification 2, an order management server 70 calculates the predicted provision time period in accordance with an order, store-staff attendance data, and work skill data of the store staff, will be described.

### <Configuration of order management server 70>

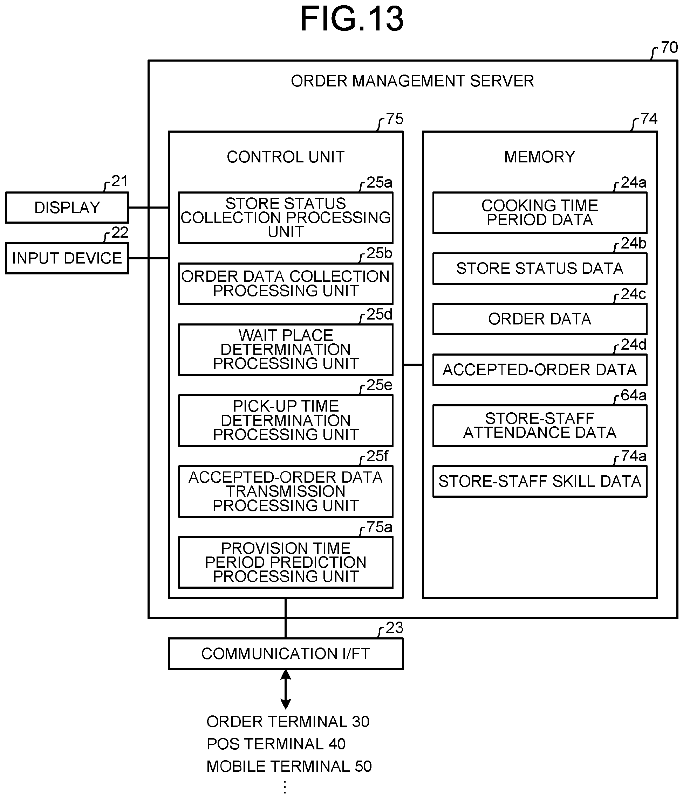

FIG. 13 is a function block diagram showing a configuration example of the order management server 70 according to Modification 2. As shown in FIG. 13, the order management server 70 includes a memory 74 (staff information memory) and a control unit 75 and is connected with the display 21, the input device 22, and the communication I/F 23.

The memory 74 is a storage device composed of a hard disk device, a nonvolatile memory, or the like, and stores the cooking time period data 24a, the store status data 24b, the order data 24c, the accepted-order data 24d, the store-staff attendance data 64a, and store-staff skill data 74a. The store-staff skill data 74a is data on the work skill of the store staff. For example, the work skill of a store clerk is the time period necessary for preparing an ordered item so as to allow takeout of the item after completion of the cooking, the time period for carrying the item to the customer seat after completion of the cooking, or the like.

The control unit 75 performs control of the entirety of the order management server 70. The control unit 75 includes the store status collection processing unit 25a, the order data collection processing unit 25b, the wait place determination processing unit 25d, the pick-up time determination processing unit 25e, the accepted-order data transmission processing unit 25f, and a provision time period prediction processing unit 75a. Specifically, for example, programs for these units are loaded to a CPU and executed, whereby processes respectively corresponding to the store status collection processing unit 25a, the order data collection processing unit 25b, the wait place determination processing unit 25d, the pick-up time determination processing unit 25e, the accepted-order data transmission processing unit 25f, and the provision time period prediction processing unit 75a are performed.

The provision time period prediction processing unit 75a predicts a time period necessary for the ordered item until it can be provided to a customer. The time period is calculated based on a corresponding cooking time period and a waiting time period corresponding to the item name in the order data 24c, the store-staff attendance data 64a, and the store-staff skill data 74a. For example, when the ordered item is a hamburger, if the cooking time period is 5 minutes, the waiting time period is 20 minutes, the additional waiting time period calculated based on the store-staff attendance data 64a is 5 minutes, and the preparation time period predicted from the store-staff skill data 74a is 5 minutes, the predicted provision time period is calculated to be 35 minutes. The waiting time period may be a total of the cooking time periods for items, which have not been provided to other waiting customers, at the time point of reception of the order. The preparation time period predicted from the store-staff skill data 74a may be calculated according to the average value, the worst value, or the like, of pieces of skill data of the attending store clerks specified based on the store-staff attendance data 64a.

As described above, in the present embodiment, the item order system 10 includes the order management server 20, the order terminal 30, the POS terminal 40, and a plurality of mobile terminals 50. The order management server 20 calculates a predicted provision time period for an item corresponding to order data, determines a pick-up time and a wait place, based on the store status, the predicted provision time period, and the provision form, and generates accepted-order data. The order terminal 30 receives the accepted-order data and provides information on the pick-up time and the wait place to the customer. Thus, it is possible to reduce the number of store clerks and/or the labor of the store clerk who leads customers and alleviate congestion.

In the above embodiment, a case where a wait place is determined based on the store status acquired by the order management server 20 and the predicted provision time period, has been described. However, the wait place may be determined based on the predicted provision time period, the pick-up time, and data of a customer seat congestion status at each time that has been obtained by the order management server 20 statistically processing past customer seat congestion statuses.

In the above embodiment, a case where the store status data 24b includes a wait place ID, a wait place, and a congestion status, has been described. However, the store status data 24b may include data of the time at which cooking of the ordered item is able to be started. The time at which cooking is able to be started is the time at which, at the time of acceptance of order data from the order terminal, cooking of the ordered item can be started after the total cooking time period for uncooked ordered items. The total cooking time period for uncooked ordered items may be stored as a waiting time period.

In the above embodiment, a case where, when an order has been made by using the mobile terminal 50, the desired pick-up time inputted by the customer is prioritized, has been described. However, when the pick-up time calculated based on the predicted provision time period calculated by the provision time period prediction processing unit 25c is earlier than the desired pick-up time, this pick-up time may also be displayed on the mobile terminal 50, and whether to pick up the item at the pick-up time or at the desired pick-up time may be allowed to be selected by the customer.

In the above embodiment, a case where the wait place is the reception counter, the customer seats, the in-store wait space, and the outside-store wait space, has been described. However, for example, a cafe or the like near the store may be set as the wait space, and when provision of the item has become ready, a notification that provision of the item is ready may be sent to the mobile terminal of the customer waiting such a wait space.

### <Relationship with hardware>

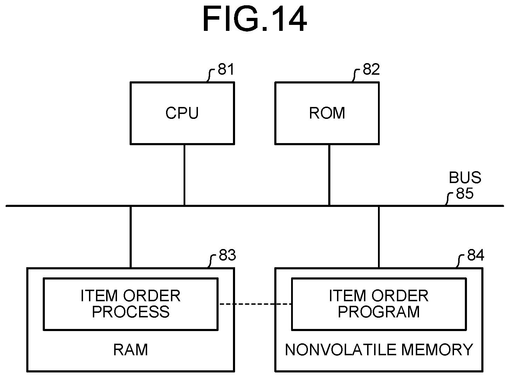

Correspondence between the order management server 20 of the item order system 10 according to the present embodiment and the main hardware configuration of a computer will be described. FIG. 14 shows an example of a hardware configuration.

In general, a computer has a configuration in which a CPU 81, a ROM 82, a RAM 83, a nonvolatile memory 84, and the like are connected with each other by a bus 85. Instead of the nonvolatile memory 84, a hard disk device may be provided. For convenience of description, only a basic hardware configuration is shown in FIG. 14.

A program and the like necessary for activation of an operating system (hereinafter, simply referred to as "OS") are stored in the ROM 82 or the nonvolatile memory 84. When power is supplied, the CPU 81 reads the program for the OS from the ROM 82 or the nonvolatile memory 84 and executes the program.

Meanwhile, various application programs to be executed on the OS are stored in the nonvolatile memory 84. The CPU 81 executes an application program while using the RAM 83 as a main memory, whereby the process corresponding to the application is performed.

An item order program for the order management server 20 of the item order system 10 according to the present embodiment is also stored in the nonvolatile memory 84 or the like, as in the case of the other application programs, and the CPU 81 loads the item order program and executes the program. In the case of the order management server 20 of the item order system 10 according to the present embodiment, an item order program that includes routines corresponding to the store status collection processing unit 25a, the order data collection processing unit 25b, the provision time period prediction processing unit 25c, the wait place determination processing unit 25d, the pick-up time determination processing unit 25e, and the accepted-order data transmission processing unit 25f shown in FIG. 3 is stored in the nonvolatile memory 84 or the like. The item order program is loaded and executed by the CPU 81, whereby a process corresponding to the store status collection processing unit 25a, the order data collection processing unit 25b, the provision time period prediction processing unit 25c, the wait place determination processing unit 25d, the pick-up time determination processing unit 25e, and the accepted-order data transmission processing unit 25f is generated.

An item order system according to one aspect of the present disclosure is configured to perform order acceptance and settlement with respect to an item ordered by a customer. The item order system includes: an order information collection unit configured to collect order information regarding an item ordered by a customer; a status information collection unit configured to collect store status information regarding a status of a store; a prediction unit configured to predict a provision time period taken until provision of the ordered item to the customer, based on at least one of the order information collected by the order information collection unit and the store status information collected by the status information collection unit; a determination unit configured to determine a wait place where the customer waits until picking up the ordered item, based on the provision time period predicted by the prediction unit; and a notification unit configured to notify the wait place determined by the wait place determination unit.

In the above configuration, the order information may be at least one of an order item, an order quantity, an order monetary amount, an item provision form, a desired item-pick-up time, and a terminal type.

In the above configuration, the store status information may be at least one of a time at which cooking of the ordered item is capable of being started, a congestion status indicating a congestion degree of the store, the number of waiting people at the wait place, and attendance information of store staff.

In the above configuration, the wait place may be any one of a pick-up counter where the customer picks up the ordered item, a customer seat where the customer eats or drinks the ordered item, an in-store wait space where the customer waits inside the store, and an outside-store wait space where the customer waits outside the store.

In the above configuration, the item order system may further include a staff information memory configured to store staff skill information regarding work skill of staff, and the prediction unit may predict a provision time period taken until provision of the ordered item to the customer, based on at least one of the order information, the store status information, and the staff skill information.

In the above configuration, the item order system may further include a memory configured to store information regarding a required time period taken until provision of the item in a predetermined period, and the prediction unit may predict the provision time period taken until provision of the ordered item to the customer, based on at least one of the order information, the store status information, and the information regarding the required time period.

In the above configuration, the item order system may further include an output unit configured to output information on the wait place. The information may be printed on paper and/or output as data to an external device.

An item order method according to one aspect of the present disclosure is performed in an order management device of performing order acceptance and settlement with respect to an item ordered by a customer. The item order method includes: an order information collection step of collecting order information regarding an item ordered by a customer; a store status information collection step of collecting store status information regarding a status of a store; a provision time period prediction step of predicting a provision time period taken until provision of the ordered item to the customer, based on at least one of the order information collected in the order information collection step, and the store status information collected in the store status information collection step; a wait place determination step of determining a wait place where the customer waits until picking up the ordered item, based on the provision time period predicted in the provision time period prediction step; and a wait place notification step of notifying the wait place determined in the wait place determination step.

A computer program product for ordering an item according to one aspect of the present disclosure is to be executed in an order management device of performing order acceptance and settlement with respect to an item ordered by a customer. The computer program product for ordering an item causes a computer to perform: an order information collection procedure of collecting order information regarding an item ordered by a customer; a store status information collection procedure of collecting store status information regarding a status of a store; a provision time period prediction procedure of predicting a provision time period taken until provision of the ordered item to the customer, based on at least one of the order information collected in the order information collection procedure, and the store status information collected in the store status information collection procedure; a wait place determination procedure of determining a wait place where the customer waits until picking up the item, based on the provision time period predicted in the provision time period prediction procedure; and a wait place notification procedure of notifying the wait place determined in the wait place determination procedure.

According to the present disclosure, when an order of an item has been accepted from a customer, it is possible to smoothly lead the customer.

The illustrated components in the above embodiment are conceptually functional constituent elements, and thus may not necessarily be configured as physical constituent elements, as illustrated in the drawings. That is, distributed or integrated forms of each device are not limited to the forms illustrated in the drawings, and all or some of the forms may be distributed or integrated functionally or physically in any unit depending on various loads, use statuses, or the like.

## Claims

1. An item order system (10) of performing order acceptance and settlement with respect to an item ordered by a customer, the item order system (10) comprising:
an order information collection unit (25b) configured to collect order information regarding an item ordered by a customer;
a status information collection unit (25a) configured to collect store status information regarding a status of a store;
a prediction unit (25c) configured to predict a provision time period taken until provision of the ordered item to the customer, based on at least one of the order information collected by the order information collection unit (25b) and the store status information collected by the status information collection unit (25a);
a determination unit (25d) configured to determine a wait place where the customer waits until picking up the ordered item, based on the provision time period predicted by the prediction unit (25c); and
a notification unit (36f) configured to notify the wait place determined by the wait place determination unit (25d).

2. The item order system (10) according to claim 1, wherein
the order information is at least one of an order item, an order quantity, an order monetary amount, an item provision form, a desired item-pick-up time, and a terminal type.

3. The item order system (10) according to claim 1, wherein
the store status information is at least one of a time at which cooking of the ordered item is capable of being started, a congestion status indicating a congestion degree of the store, the number of waiting people at the wait place, and attendance information of store staff.

4. The item order system (10) according to claim 1, wherein
the wait place is any one of a pick-up counter where the customer picks up the ordered item, a customer seat where the customer eats or drinks the ordered item, an in-store wait space where the customer waits inside the store, and an outside-store wait space where the customer waits outside the store.

5. The item order system (10) according to claim 1, further comprising
a staff information memory (74) configured to store staff skill information regarding work skill of staff, wherein
the prediction unit (25c) predicts a provision time period taken until provision of the ordered item to the customer, based on at least one of the order information, the store status information, and the staff skill information.

6. The item order system (10) according to claim 1, further comprising
a memory (24) configured to store information regarding a required time period taken until provision of the item in a predetermined period, wherein
the prediction unit (25c) predicts the provision time period taken until provision of the ordered item to the customer, based on at least one of the order information, the store status information, and the information regarding the required time period.

7. The item order system (10) according to any one of claims 1 to 6, further comprising an output unit (36g) configured to output information on the wait place.

8. An item order method to be performed in an order management device of performing order acceptance and settlement with respect to an item ordered by a customer, the item order method comprising:
collecting order information regarding an item ordered by a customer;
collecting store status information regarding a status of a store;
predicting a provision time period taken until provision of the ordered item to the customer, based on at least one of the order information and the store status information;
determining a wait place where the customer waits until picking up the ordered item, based on the provision time period; and
notifying the wait place.

9. A computer program product for ordering an item to be executed in an order management device of performing order acceptance and settlement with respect to the item ordered by a customer, the computer program product causing a computer to perform a method comprising:
collecting order information regarding an item ordered by a customer;
collecting store status information regarding a status of a store;
predicting a provision time period taken until provision of the ordered item to the customer, based on at least one of the order information and the store status information;
determining a wait place where the customer waits until picking up the ordered item, based on the provision time period; and
notifying the wait place.
